(19) Europäisches Patentamt
European Patent Office
Office européen des brevets

(11) **EP 4 320 706 B1**

# (12) FASCICULE DE BREVET EUROPEEN

(45) Date de publication et mention
de la délivrance du brevet:
**29.01.2025 Bulletin 2025/05**

(21) Numéro de dépôt: **22718739.0**

(22) Date de dépôt: **30.03.2022**

(51) Classification Internationale des Brevets (IPC):
**H02K 1/276** *(2022.01)* **H02K 29/03** *(2006.01)*

(52) Classification Coopérative des Brevets (CPC):
**H02K 1/276; H02K 29/03;** H02K 2201/03;
H02K 2213/03

(86) Numéro de dépôt international:
**PCT/FR2022/050602**

(87) Numéro de publication internationale:
**WO 2022/214752 (13.10.2022 Gazette 2022/41)**

## (54) ROTOR POUR MOTEUR SYNCHRONE SANS BALAIS À AIMANTS PERMANENTS INSÉRÉS
ROTOR FÜR BÜRSTENLOSEN SYNCHRONMOTOR MIT EINGESETZTEN DAUERMAGNETEN
ROTOR FOR BRUSHLESS SYNCHRONOUS MOTOR WITH INSERTED PERMANENT MAGNETS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.04.2021 FR 2103605**

(43) Date de publication de la demande:
**14.02.2024 Bulletin 2024/07**

(73) Titulaire: **SEB S.A.**
**69130 Ecully (FR)**

(72) Inventeurs:
• **PICHOT, Renaud**
**69008 Lyon (FR)**
• **SCHMERBER, Louis**
**Québec, Québec J1NYN02 (CA)**

(74) Mandataire: **Germain Maureau**
**12, rue Boileau**
**69006 Lyon (FR)**

(56) Documents cités:
EP-A1- 2 733 823          EP-A1- 3 832 851
WO-A1-2020/066368         WO-A2-2007/004009
US-A1- 2009 115 279       US-A1- 2020 412 186
US-A1- 2021 028 661

• MINGJI LIU ET AL: "Optimization of permanent magnet motor air-gap flux density based on the non-uniform air gap", PROCEEDINGS 2013 INTERNATIONAL CONFERENCE ON MECHATRONIC SCIENCES, ELECTRIC ENGINEERING AND COMPUTER (MEC), IEEE, 20 December 2013 (2013-12-20), pages 3422 - 3426, XP032634600, ISBN: 978-1-4799-2564-3, [retrieved on 20140827], DOI: 10.1109/ MEC.2013.6885604
• CHANG-SUNG JIN ET AL: "Design of IPMSM to reduce cogging torque considering tapping the rotor and shape of barrier", INTELEC 09 : 31ST INTERNATIONAL TELECOMMUNICATIONS ENERGY CONFERENCE ; INCHEON, KOREA, 18 - 22 OCTOBER 2009, IEEE, PISCATAWAY, NJ, USA, 18 October 2009 (2009-10-18), pages 1 - 4, XP031579515, ISBN: 978-1-4244-2490-0

## Description

### Domaine technique

La présente invention se rapporte au domaine technique général de l'architecture moteur.

Plus particulièrement, la présente invention se rapporte à une configuration de rotor pour moteur synchrone sans balais à aimants permanents insérés dans un empilement de tôles, qualifié de rotor IPM pour «inserted permanent magnets».

### Etat de la technique

Il est connu que ce type de configuration procure un couple moteur élevé.

Le prix de ces moteurs réside majoritairement dans la nature des aimants permanents utilisés.

Ainsi, l'utilisation d'aimants permanents à base de terres rares engendrera un coût beaucoup plus important que l'utilisation d'aimants permanents à base de ferrites.

Dans ce cas, il convient donc de réduire au maximum la quantité des aimants permanents à base de terres rares pour atteindre un flux d'entrefer donné.

Comme pour toute machine synchrone, il convient également d'optimiser le couple utile de manière à obtenir un rendement optimal.

Les aimants permanents doivent également présenter une bonne tenue mécanique dans l'empilement de tôles et l'empilement de tôles doit être suffisamment solide pour pouvoir retenir les aimants permanents.

A cet effet, il est connu du document WO2012014836A1 de disposer d'un rotor à aimants permanents insérés dans un empilement de tôles présentant des isthmes et des barrières de flux pour favoriser l'orientation dans l'entrefer du flux magnétique généré par les permanents.

Par ailleurs, dans une topologie de machines à aimants avec aimants permanents insérés IPM, des oscillations de couple sont nécessairement générées. Ces ondulations de couple sont plus ou moins importante selon la stratégie de commande appliquée à l'alimentation du moteur. Il convient donc également de diminuer au maximum ces ondulations de couple ou «torque ripple» en anglais, au moins pour une stratégie de commande déterminée.

A cet effet, il est connu, par exemple du document JP2009118731, de disposer d'un moteur électrique avec un rotor à aimant permanent intégré possédant des barrières de flux et un renfoncement à la surface de l'entrefer. Les aimants permanents sont disposés deux à deux en «V» de manière à concentrer le flux des aimants dans l'entrefer.

La solution proposée a pour but de réduire les ondulations de couple. Cependant, la disposition des aimants permanents disposés deux à deux en «V» («V-shape») augmente considérablement la quantité des aimants permanents et donc le coût du moteur si des aimants coûteux devaient être utilisés. Une telle topologie est en fait davantage adaptée à l'utilisation d'aimants à bas coûts, comme des aimants en ferrite, et permet de concentrer le flux magnétique des aimants dans l'entrefer. La présente invention ne s'intéresse pas à une topologie de moteur avec des aimants à concentration de flux.

Il est connu que les machines synchrones à rotor à aimants permanents insérés (IPM) sont sujettes à un couple de détente (ou «cogging torque» en anglais) important, en particulier quand des terres rares sont utilisées. En effet, dans ce type de topologie les aimants permanents insérés du rotor exercent une force d'attraction magnétique sur les dents du stator. Cette force s'oppose au mouvement de rotation du rotor, engendrant ainsi un couple de détente qui génère des harmoniques par la forme de la surface du rotor et ainsi des vibrations et du bruit.

Il est connu que la forme de la surface externe du rotor ainsi que la forme des isthmes et des zones d'insertion des aimants permanents peuvent être travaillés pour réduire le couple de détente.

A cet effet, le document US2012/256514 propose une forme de surface externe du rotor ainsi que des barrières de flux mais propose également des barrières de flux symétriques disposées sur le stator, ce qui complexifie énormément l'architecture du moteur. De plus, la quantité d'aimant permanent demeure importante et n'est donc pas optimisée.

Il est également connu du document US2018/0205274 de disposer d'un moteur électrique avec un rotor à aimants permanents intégrés possédant des aimants permanents répartis en «V» (« V-shape») présentant des barrières de flux présentant une forme et une orientation particulière à proximité de l'entrefer.

Cependant, comme déjà évoqué, la disposition des aimants permanents disposés deux à deux en «V» («V-shape») augmente considérablement la quantité nécessaire des aimants permanents et donc le coût du moteur.

Le document WO 2020/066368 A1 (DAIKIN IND LTD [JP]) 2 avril 2020 (2020-04-02) décrit également un rotor optimisé de l'art antérieur.

### Résumé de l'invention

Aussi, la présente invention a pour but de résoudre tout ou partie des inconvénients mentionnés ci-dessus, notamment en proposant un rotor pour moteur synchrone sans balais à aimants permanents insérés dont l'architecture permet d'obtenir un couple utile maximal, avec une quantité d'aimants permanents déterminée, tout en réduisant à la fois les oscillations de couple pour une stratégie de commande déterminée et le couple de détente. Cette architecture permet également de conserver une bonne résistance aux contraintes mécaniques et une bonne tenue des aimants permanents insérés, notamment à des vitesses relativement élevées du rotor.

A cet effet, l'invention se rapporte à un rotor pour moteur synchrone sans balais à aimants permanents insérés agencé pour être alimenté selon une stratégie de commande prédéterminée, ledit rotor présentant une forme sensiblement cylindrique définissant une surface d'entrefer du rotor et comprenant :

- un nombre p de paires d'aimants permanents définissant des pôles magnétiques du rotor, et

- un nombre 2p de logements agencés périodiquement selon un angle polaire de pas ($\frac{\pi}{p}$) prédéterminé, et agencés pour recevoir la pluralité d'aimants permanents, les logements étant ménagés dans un empilement de tôles et disposés de façon à orienter radialement le flux magnétique des aimants permanents dans l'entrefer du moteur,

les aimants permanents étant disposés dans les logements et répartis le long de la circonférence du rotor à proximité de la surface d'entrefer du rotor selon un angle polaire de pas ($\frac{\pi}{p}$) prédéterminé en lien avec le nombre p de paires d'aimants permanents du rotor, chaque aimant permanent présentant un sens de flux magnétique opposé au sens de flux magnétique des deux aimants permanents adjacents afin de produire une induction magnétique selon un angle polaire de pas ($\frac{2\pi}{p}$) dans l'entrefer,

les logements présentant chacun une portion agencée pour recevoir un aimant permanent, un premier évidement et un deuxième évidement contigus à ladite portion et contigus aux surfaces terminales de l'aimant permanent inséré dans ladite portion du logement, lesdites surfaces terminales étant parallèles à la direction d'aimantation de l'aimant permanent,

la surface d'entrefer du rotor comprenant des zones plates de profil disposés sensiblement entre un premier évidement d'un logement d'un aimant permanent et le deuxième évidement d'un autre logement d'un aimant permanent contigu, et des zones courbes dont la forme de profil est donnée par une équation polaire comprenant des coefficients choisis en fonction de la stratégie de commande déterminée pour définir des harmoniques entre la forme du signal de la force électromotrice et la forme du signal du courant injecté dans le moteur, lesdites zones courbes s'étendant sensiblement dans un intervalle angulaire défini depuis un rayon situé entre un premier évidement et un deuxième évidement consécutifs de deux aimants permanents adjacents jusqu'à un rayon situé entre un premier évidement et un deuxième évidement consécutifs d'un des aimants permanents adjacents correspondant au demi-angle polaire de pas ($\frac{\pi}{2p}$) dans l'entrefer,

lesdits premier et deuxième évidements définissant des barrières de flux magnétique formant des isthmes magnétiques magnétiquement saturables entre lesdits premier et deuxième évidements et la surface d'entrefer du rotor, lesdits premier et deuxième évidements présentant une surface supérieure convexe en direction de la surface d'entrefer du rotor et s'étendant dans un plan de coupe transversal à l'axe du rotor depuis un premier point proximal de la surface d'entrefer du rotor et disposé à l'extrémité de la portion du logement agencé pour recevoir un aimant permanent jusqu'à un deuxième point proximal de la surface d'entrefer du rotor telle que la distance de ce deuxième point à la surface d'entrefer du rotor est supérieure ou égale à une valeur minimale prédéterminée,

les points du profil dans le plan de coupe transversal à l'axe du rotor de la surface supérieure des premier et deuxième évidements entre le premier point et le deuxième point étant définis par un système d'équations paramétriques exploitant des splines cubiques présentant des conditions initiales prédéterminées au premier point et au deuxième point de manière à maximiser le flux magnétique dans l'entrefer du moteur.

Le profil de la surface extérieure de la surface d'entrefer permet d'améliorer de façon importante le couple d'un moteur synchrone sans balais à aimants permanents insérés dans un empilement de tôles, utilisant une stratégie de commande prédéterminée, et avec un volume d'aimant permanent minimal.

Cette configuration permet également d'utiliser un seul aimant permanent par pôle de rotor réduisant ainsi les coûts par rapport à une configuration avec deux aimants permanents disposés en « V » (« V-shape »).

La forme des isthmes et des barrières de flux permet quant à elle de conférer une faible réluctance à ces zones et donc de les saturer rapidement en flux magnétique de façon à concentrer le surplus de flux magnétique vers l'entrefer.

Ces formes permettent également de conserver une bonne résistance aux contraintes mécaniques.

Selon un aspect de l'invention, les conditions initiales prédéterminées au premier point et au deuxième point du système d'équations paramétriques exploitant les splines cubiques imposent les directions des dérivés de la surface supérieure au premier point et au deuxième point.

Selon un aspect de l'invention, la direction de la dérivé de la surface supérieure au premier point est imposée de manière à être sensiblement colinéaire à la direction tangente des surfaces terminales de l'aimant permanent dans le plan de coupe transversal à l'axe du rotor, et dans lequel la direction du vecteur de la dérivé de la surface supérieure au deuxième point est imposée de manière à être sensiblement colinéaire à la direction de la tangente en un point de la surface d'entrefer du rotor, ce point étant un point de ladite surface d'entrefer le plus proche du deuxième point.

Selon un aspect de l'invention, les amplitudes et les angles polaires des vecteurs des dérivés au premier point et au deuxième point sont déterminées de façon à maximiser le flux magnétique dans l'entrefer, et les coordonnées des vecteurs des dérivés au premier point et au deuxième point sont déterminées de manière à ce que :

- la distance entre la surface supérieure et la surface d'entrefer reste supérieure ou égale à la valeur minimale prédéterminée, et
- le système d'équations paramétriques reste bijectif.

Selon un aspect de l'invention, les isthmes magnétiques présentent une valeur minimale prédéterminée supérieure ou égale à l'épaisseur de l'une des tôles de l'empilement de tôles..

Selon un aspect de l'invention, l'équation polaire donnant le profil de la surface d'entrefer du rotor est de la forme :

[Math 1]

$$R_{rotor}(\theta) = R_0 - \frac{e_0}{\sum_n \alpha_n . \cos(n * p * \theta)}$$

où $R_{rotor}$ est le rayon externe du rotor, $R_0$ est une constante prédéterminée, $e_0$ est une valeur prédéfinie d'entrefer minimale du moteur, p est le nombre de paires de pôles du rotor, n est l'indice de l'harmonique, les $\alpha_n$ étant des paramètres dont les valeurs pour n=1 à i sont obtenues par la décomposition en série de Fourier de l'induction magnétique de l'entrefer de façon à obtenir une force électromotrice similaire au courant injectée pour obtenir un couple utile du moteur le plus élevé possible et minimiser les ondulations de couple parasites du moteur provoquées par la stratégie de commande, et dans lequel l'équation polaire du profil de la surface d'entrefer du rotor est définie dans un intervalle angulaire $\theta$ prédéterminé égal à $\left[0; \frac{\pi}{2p}\right]$, correspondant au demi-angle polaire de pas $\frac{\pi}{2p}$ dans l'entrefer e. Cet intervalle correspond à l'intervalle angulaire entre un rayon situé entre deux évidements consécutifs de deux aimants permanents adjacents et un rayon situé entre deux évidements consécutifs d'un des aimants permanents adjacents, avec pour origine le centre des pôles magnétiques.

La présente invention a également pour objet un moteur comprenant un rotor tel que décrit précédemment, ledit moteur étant commandé par une stratégie de commande générant une onde périodique de courant en créneaux dans les phases du moteur, et dans laquelle la décomposition harmonique en série de Fourier de l'induction magnétique de l'entrefer est déterminée de façon à obtenir une force électromotrice similaire au courant injectée pour avoir un couple moyen du moteur maximum et une ondulation de couple minimale et un couple de détente minimal.

Cette disposition permet de produire un couple utile plus important avec moins de d'ondulations de couple.

**Brève description des figures**

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :

[Fig 1] est une vue schématique tronquée de la configuration du rotor selon l'invention dans son environnement avec le stator du moteur.
[Fig 2] est une vue schématique tronquée de la configuration du rotor selon l'invention.
[Fig 3] est une vue schématique agrandie de la configuration du rotor selon l'invention.
[Fig 4] est une vue schématique des lignes de champs dans une position relative du rotor et du stator pour la configuration du rotor selon l'invention.
[Fig 5] montre la fonction d'obtention du profil de la surface externe du rotor selon l'invention

[Fig 6] montre la fonction spline cubique permettant l'obtention du profil de la surface supérieure d'un évidement de l'empilement de tôle du rotor selon l'invention.

[Fig 7] est un graphe illustrant la comparaison de la décomposition en série de Fourier d'une force électromotrice trapézoïdale et sinusoïdale définies par la géométrie du rotor.

[Fig 8] est une vue schématique du circuit magnétique reluctant formé par l'interaction magnétique entre un pôle du stator et un pôle du rotor selon l'invention.

Seuls les éléments nécessaires à la compréhension de l'invention ont été représentés. Pour faciliter la lecture des dessins, les mêmes éléments portent les mêmes références d'une figure à l'autre.

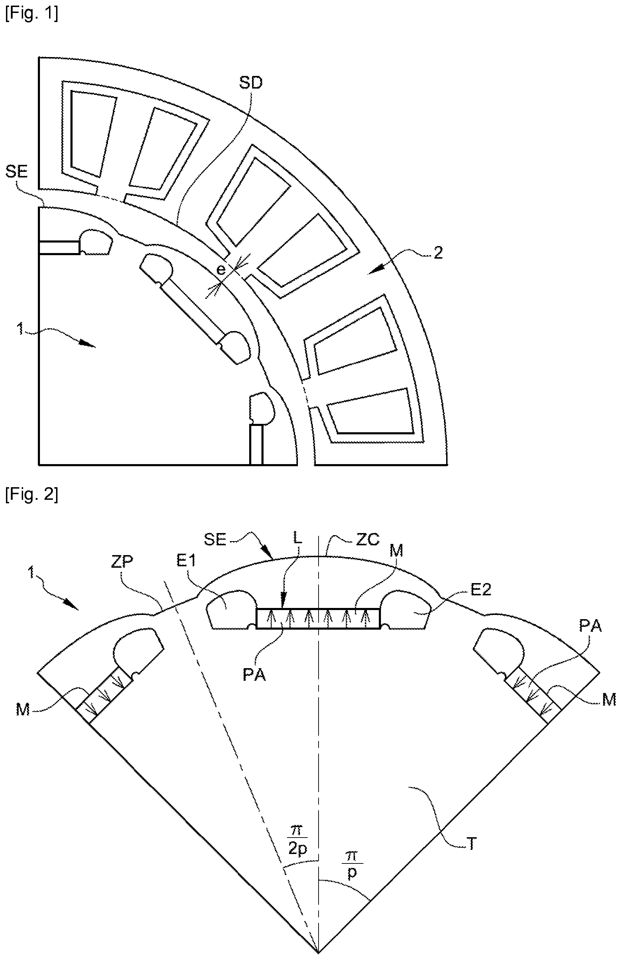

Comme illustré à la figure 1, un rotor 1 pour moteur synchrone sans balais à aimants permanents M insérés destiné à être alimenté par une électronique de commande (non illustrée) de nature prédéterminée, présente une forme sensiblement cylindrique définissant une surface d'entrefer SE du rotor 1.

Ce rotor 1 est destiné à être inséré à l'intérieur d'un stator 2. La distance minimale entre la surface d'entrefer SE du rotor 1 et la surface d'une dent SD du stator 2 définie l'entrefer e du moteur.

Comme illustré plus particulièrement à la figure 2, le rotor 1 comprend un nombre p de paires d'aimants permanents M définissant des pôles magnétiques du rotor 1, et un nombre 2p de logements L agencés périodiquement selon un angle polaire de pas $\frac{\pi}{p}$ prédéterminé pour recevoir la pluralité d'aimants permanents M.

Chaque aimant permanent M est composé de terres rares, par exemple du néodyme ou du samarium-cobalt, et présente une direction d'aimantation indiqué par les flèches épaisses représentées sur chaque aimant permanent M à la figure 1.

Les aimants permanents M sont disposés dans les logements L ménagés dans un empilement de tôles T et répartis le long de la circonférence du rotor 1 à proximité de la surface d'entrefer SE du rotor 1 selon un angle polaire de pas $\frac{\pi}{p}$ prédéterminé en lien avec le nombre p de paires d'aimants permanents M du rotor 1.

L'empilement de tôles est réalisé de manière conventionnelle en fer doux.

Chaque aimant permanent M présente un sens de flux magnétique opposé au sens de flux magnétique des deux aimants permanents adjacents afin de produire une induction magnétique selon un angle polaire de pas $\frac{2\pi}{p}$ dans l'entrefer e.

Comme illustré sur la figure 2, les logements L sont disposés de façon à orienter radialement le flux magnétique des aimants permanents M dans l'entrefer e du moteur.

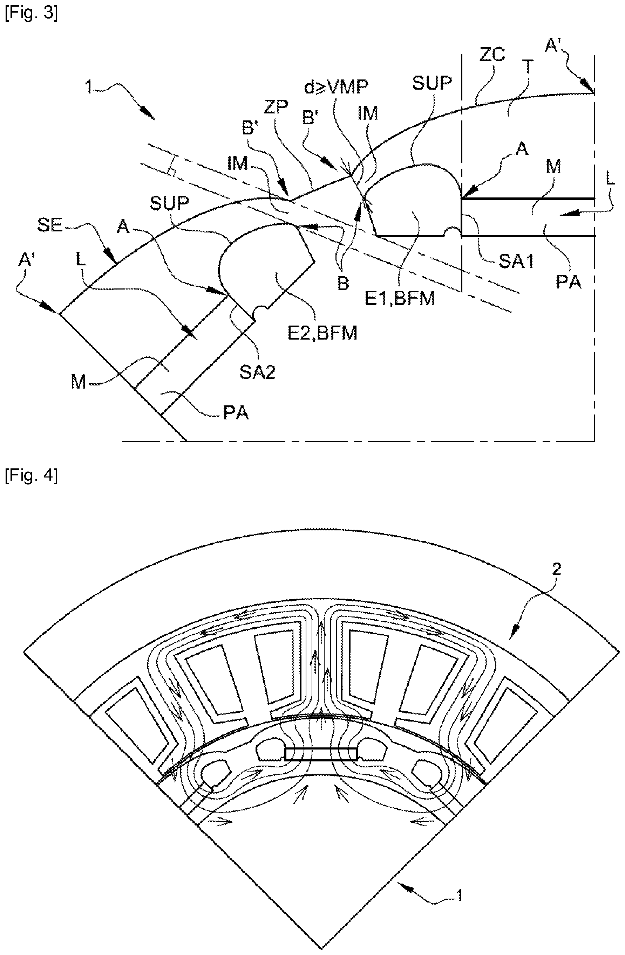

Comme illustré plus en détail à la figure 3, les logements L présentent chacun une portion PA agencée pour recevoir un aimant permanent M, ainsi qu'un premier évidement E1 et un deuxième évidement E2 disposés respectivement de part et d'autre de la portion PA du logement L agencée pour recevoir un aimant permanent M.

**Forme de la surface d'entrefer du rotor :**

Pour un moteur synchrone sans balais à aimants permanents M insérés dans un empilement de tôles T, une FEM (Force Electro Motrice) trapézoïdale est préférée car elle permet de produire un couple plus important et avec moins d'ondulations de couple (ou «torque ripple»).

En effet, cette stratégie électronique de commande est d'ailleurs adaptée à ce type de moteur car elle génère une onde périodique de courant en créneaux dans les phases du moteur, et que la décomposition harmonique en série de Fourier de l'induction magnétique de l'entrefer e est déterminée de façon à obtenir une force électromotrice similaire au courant injectée ce qui permet d'avoir un couple moyen du moteur maximum, une ondulation de couple minimale, et un couple de détente minimal.

Un autre aspect nuisible important des moteurs est leur couple de détente qui est causé par la variation d'énergie magnétique à vide du fait de positions d'équilibre/déséquilibre magnétiques successives. Il est nécessaire de réduire ce couple de détente non souhaité en particulier dans le cas des moteurs à aimants permanents M insérés (IPM).

Pour cela, il convient de conférer une forme particulière à la surface d'entrefer SE du rotor 1 de manière à ce qu'elle assure une transition de l'induction magnétique d'entrefer plus douce. Dans ce cas, le couple de détente peut être quasiment annulé. Une induction d'entrefer parfaitement sinusoïdale permettrait de minimiser au mieux le couple de détente car les variations de flux suivant l'angle sont les plus faibles. Cependant, une induction d'entrefer sinusoïdale entraine plus d'ondulation de couple utile pour une stratégie de commande trapézoïdale.

L'entrefer e est formé de façon à avoir une perméance d'entrefer qui varie suivant un signal composé d'harmoniques souhaitées en fonction de l'angle d'ouverture.

Ainsi, la surface d'entrefer SE du rotor 1 est paramétrée selon une équation polaire dans le référentiel polaire Réf ayant pour origine le centre du pôle magnétique, l'équation polaire étant de la forme :

[Math 2]

$$R_{rotor}(\theta) = R_0 - \frac{e_0}{\sum_n \alpha_n . \cos(n * p * \theta)}$$

où $R_{rotor}$ est le rayon externe du rotor, $R_0$ est une constante prédéterminée, $e_0$ est une valeur prédéfinie d'entrefer e minimale du moteur, p est le nombre de paires de pôles du rotor, n est l'indice de l'harmonique, les $\alpha_n$ étant des paramètres dont les valeurs pour n=1 à i sont obtenues par la décomposition en série de Fourier de l'induction magnétique de l'entrefer de façon à obtenir une force électromotrice similaire au courant injectée pour obtenir un couple utile du moteur le plus élevé possible et minimiser les ondulations de couple parasites du moteur provoquées par la stratégie de commande, et dans lequel l'équation polaire de la surface d'entrefer SE du rotor 1 est définie dans un intervalle $\theta$ correspondant au demi-angle polaire de pas $\frac{\pi}{2p}$ dans l'entrefer e.

Comme illustré à la figure 3, cette équation définie une décroissance entre un point A' et un point B' de la surface d'entrefer SE du rotor 1.

Dans ce cas, les amplitudes et les angles polaires des vecteurs des dérivés au premier point A' et au deuxième point B' sont déterminés de façon à correspondre à une équation avec une décomposition harmonique prédéterminée de l'induction magnétique de l'entrefer e de manière à ce que :

-    la distance entre la surface d'une dent SD du stator 2 et la surface d'entrefer SE, autrement dit l'entrefer e, et
-    la solution de l'équation reste bijective.

Le fait de ne conserver que les solutions bijectives de l'équation permet d'éviter les solutions qui formeraient une boucle, incompatible avec le profil d'une surface d'entrefer SE.

Au bout des pôles, l'équation s'annule, il est donc impossible d'utiliser cette formule pour définir un profil de la surface d'entrefer SE sur tout le demi-angle polaire de pas $\frac{\pi}{2p}$ dans l'entrefer e. Pour cette raison la fin de la plage angulaire est tronquée.

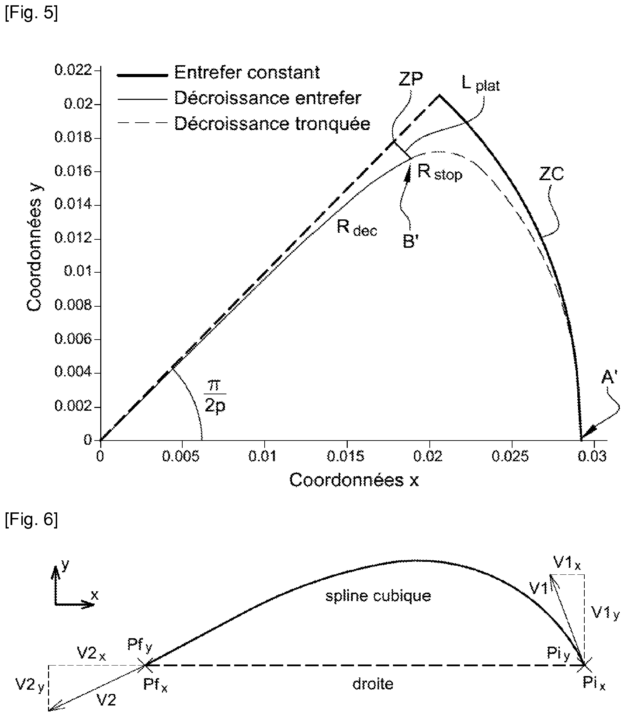

La figure 5 compare le profil de la surface d'entrefer SE, adopté par le rotor 1 selon l'invention par rapport à la forme du profil qu'aurait une surface d'entrefer SE lisse, c'est-à-dire totalement cylindrique.

La courbe $R_{dec}$ définissant la décroissance de la surface d'entrefer SE suit la formule ci-dessus, mais seule la partie tronquée allant jusqu'au point $R_{stop}$, correspondant au point B', est utilisée pour définir la surface d'entrefer SE du rotor 1 selon l'invention sur un demi-angle polaire de pas $\frac{\pi}{2p}$ dans l'entrefer e.

Ce point $R_{stop}$ correspond au point de jonction de la courbe $R_{dec}$ avec le segment $L_{plat}$ qui s'étend transversalement au rayon vers lequel converge la courbe $R_{dec}$. Du fait des contraintes industrielles de réalisation, la longueur de ce segment $L_{plat}$ est imposée en fonction du diamètre du rotor 1.

Le motif de la surface d'entrefer SE défini sur un angle polaire $\frac{\pi}{p}$ résulte de la symétrie axiale autour de l'axe d'origine, de la courbe $R_{dec}$ et du segment $L_{plat}$.

Ce motif s'étend sensiblement entre le premier évidement E1 et le deuxième évidement E2 du logement L d'un aimant permanent M dans un intervalle angulaire défini depuis un rayon situé entre un premier évidement E1 et un deuxième évidement E2 consécutifs de deux aimants permanents M adjacents jusqu'à un rayon situé entre un premier évidement E1 et un deuxième évidement E2 consécutifs d'un des aimants permanents M adjacents correspondant au demi-angle polaire de pas $\frac{\pi}{2p}$ dans l'entrefer e.

Ce motif de la surface d'entrefer SE, est répété sur toute la périphérie de la surface d'entrefer SE du rotor 1.

Dans l'exemple présenté, pour un rotor de diamètre d'environ 58 cm, la longueur du segment $L_{plat}$ est d'environ 2 mm.

Cela abouti à la définition du profil de la surface d'entrefer SE par une zone courbe ZC et une zone plate ZP. Du fait de la largeur de la zone plate ZP de la surface d'entrefer SE à cet angle, l'effet de cette zone plate ZP est faible sur le couple de détente mais également sur la FEM.

Les zones plates ZP de la surface de l'entrefer SE du rotor 1 sont disposées sensiblement entre deux logements L adjacents.

L'originalité de ce profil de surface d'entrefer SE du rotor 1 réside dans le fait d'ajouter des harmoniques au dénominateur de l'équation définissant la perméance d'entrefer e afin d'avoir plus d'harmoniques dans l'induction d'entrefer et par la même plus d'harmoniques dans la FEM.

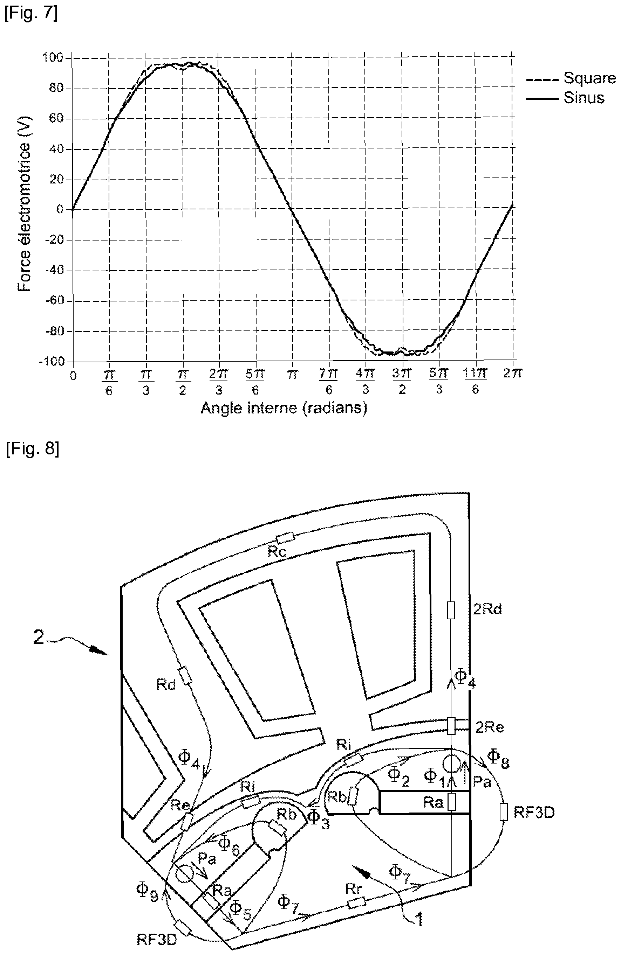

En particulier, des harmoniques telles que la FEM soit plus trapézoïdale sur l'intervalle de commande électrique $\frac{\pi}{3}$ et $\frac{2\pi}{3}$ comme présenté sur la figure 7.

Le fait de sélectionner certaines harmoniques permet d'avoir des fronts d'induction plus doux et réduit le couple de détente du moteur par rapport à un rotor lisse.

En revanche, l'ajout d'harmoniques augmente le couple de détente par rapport à une forme sinusoïdale pure. Le choix des harmoniques est donc un compromis entre l'ondulation de couple de commande, le couple moyen souhaité (qui est le couple utile du moteur) et le couple de détente qu'il convient de minimiser.

Le nombre d'harmoniques injectées dépend des contraintes d'industrialisation du rotor 1, et donc de la taille du rotor. Plus le rotor est grand, plus il est possible d'injecter des harmoniques. Le nombre d'harmoniques peut par exemple être égal à i=9 dans l'exemple de rotor 1 présenté.

Cette surface d'entrefer SE décrite à l'aide d'harmoniques, offre ainsi un couple moyen plus important avec une stratégie de commande générant une onde périodique de courant en créneaux dans les phases du moteur, et impacte peu le couple de détente.

**Forme des barrières de flux magnétique** :

Comme illustré à la figure 3, les aimants permanents M présentent des surfaces terminales SA1, SA2 débouchant chacune en regard respectivement d'un premier logement E1 et d'un deuxième logement E2. Les surfaces terminales SA1, SA2 sont chacune parallèles à la direction d'aimantation de l'aimant permanent M.

Les premier et deuxième évidements E1, E2 définissent ainsi des barrières de flux magnétique BFM et forment sur l'empilement de tôles T des isthmes magnétiques IM disposés entre lesdits premier et deuxième évidements E1, E2 et la surface d'entrefer SE du rotor 1.

La faible épaisseur des isthmes magnétiques entraine rapidement leur saturation. Cette saturation est illustrée à la figure 4 où l'on peut voir que seul une infime partie des lignes de champs magnétiques reboucle directement dans le rotor 1 à travers les isthmes magnétiques IM.

Afin d'optimiser la fonction des barrières de flux magnétiques BFM, les premier et deuxième évidements E1, E2 présentent une surface supérieure SUP convexe en direction de la surface d'entrefer SE du rotor 1 et s'étendent dans un plan de coupe transversal à l'axe du rotor 1 depuis un premier point A proximal de la surface d'entrefer SE du rotor 1, et disposé à l'extrémité de la portion PA du logement agencée pour recevoir un aimant permanent M, jusqu'à un deuxième point B proximal de la surface d'entrefer SE du rotor 1 telle que la distance de ce deuxième point B à la surface d'entrefer SE du rotor 1 est supérieure à une valeur minimale prédéterminée VMP.

Cette valeur minimale prédéterminée VMP est choisie de manière à conserver une bonne résistance aux contraintes mécaniques et une bonne tenue des aimants permanents M insérés, notamment à des vitesses relativement élevées du rotor 1, mais aussi de pouvoir facilement découper les tôles magnétiques au cours du procédé d'industrialisation.

Du point de vue magnétique il est préférable d'avoir une épaisseur des isthmes magnétiques IM la plus fine possible et la plus longue possible. Ce qui conduit à une saturation magnétique rapide de la zone. Généralement, l'épaisseur minimale des isthmes magnétiques IM, correspondant à la valeur minimale prédéterminée VMP, est au moins égale l'épaisseur de la tôle du paquet de tôle T. Dans tous les cas, cette valeur minimale prédéterminée VMP ne peut être inférieure à l'épaisseur des tôles utilisées dans l'empilement de tôles T.

Les points du profil dans le plan de coupe transversal à l'axe du rotor 1 de la surface supérieure SUP des premier et deuxième évidements E1, E2 entre le premier point A et le deuxième point B sont définis par un système d'équations paramétriques exploitant des splines cubiques présentant des conditions initiales prédéterminées au premier point A et au deuxième point B de manière à maximiser le flux magnétique dans l'entrefer du moteur.

Comme illustré à la figure 6, les splines cubiques sont un outil mathématique permettant d'interpoler une courbe par une fonction lisse. Les splines cubiques représentent un compromis très intéressant entre la régularité de la courbe obtenue et le degré des polynômes utilisés. Leur régularité permet d'éviter les discontinuités sur l'allure d'induction et de diminuer le couple de détente.

Cette fonction spline cubique est décrite avec 4 paramètres (a, b, c et d) et est fonction de t. Une fonction est définie pour chaque axe x et y.

[Math 3]

$$f_x(t) = a_x t^3 + b_x t^2 + c_x t + d_x$$

[Math 4]

$$f_y(t) = a_y t^3 + b_y t^2 + c_y t + d_y$$

La détermination de ces paramètres passe par l'expression de 4 formules représentant différentes conditions qui forment un système linéaire :

[Math 5]

$$f(t = 0) \rightarrow P_i$$

Coordonnée initiale

[Math 6]

$$f(t = 1) \rightarrow P_f$$

Coordonnée finale

[Math 7]

$$\frac{df(t = 0)}{dt} \rightarrow V1$$

Dérivée de départ

[Math 8]

$$\frac{df(t = 1)}{dt} \rightarrow V2$$

Dérivée d'arrivée

[Math 9]

$$P_i = d$$

[Math 10]

$$P_f = a + b + c + d$$

[Math 11]

$$V1=c$$

[Math 12]

$$V2=3a+2b+c$$

Avec les valeurs de Pi, Pf, V1 et V2, les paramètres a, b, c et d sont déterminés pour chaque axe x et y, la fonction spline cubique peut donc être utilisée pour paramétrer la forme de la surface supérieure SUP de la barrière de flux magnétique BFM. Dans ce cas, les coordonnées des points initial et final sont fixes puisqu'elles dépendent de la géométrie du rotor 1. Seules les expressions des dérivées sont à déterminer :

[Math 13]

$$\begin{bmatrix} a \\ b \\ c \\ d \end{bmatrix} = inv \begin{pmatrix} 0 & 0 & 0 & 1 \\ 1 & 1 & 1 & 1 \\ 0 & 0 & 1 & 0 \\ 3 & 2 & 1 & 0 \end{pmatrix} \cdot \begin{bmatrix} Pi \\ Pf \\ V1 \\ V2 \end{bmatrix}$$

Une optimisation avec des simulations numériques permet de déterminer les coordonnées des vecteurs des dérivées de la surface supérieure SUP au premier point A et au deuxième point B afin de canaliser le flux au mieux et ainsi corréler avec l'allure de l'induction d'entrefer souhaitée.

C'est ainsi que les coordonnées du vecteur de la dérivé de la surface supérieure SUP au premier point A est imposée de manière à être sensiblement colinéaire à la direction tangente des surfaces terminales SA1, SA2 de l'aimant permanent M dans le plan de coupe transversal à l'axe du rotor 1, et que la direction du vecteur de la dérivé de la surface supérieure au deuxième point B est imposée de manière à être sensiblement colinéaire à la direction de la tangente au point B' de la surface d'entrefer SE du rotor 1, B' étant un point de ladite surface d'entrefer SE le plus proche du deuxième point B coïncidant avec le point $R_{stop}$ de la courbe $R_{dec}$ définissant la décroissance de la surface d'entrefer SE.

Les amplitudes et angles polaires des vecteurs des dérivés au premier point A et au deuxième point B sont déterminés de façon à maximiser le flux magnétique dans l'entrefer e.

Ainsi, les limites des amplitudes et angles polaires des vecteurs des dérivés au premier point A et au deuxième point B sont déterminés de manière à ce que :

- la distance entre la surface supérieur SUP et la surface d'entrefer SE, autrement dit l'épaisseur minimale de l'isthme magnétique IM, reste supérieure ou égale à la valeur minimale prédéterminée VMP, et
- le système d'équations paramétriques reste bijectif.

Tout comme pour la définition de la zone courbe ZC du profil de la surface d'entrefer SE, le fait de ne conserver que les solutions bijectives de l'équation permet d'éviter les solutions qui formeraient une boucle, incompatibles avec le profil d'une surface supérieure SUP des premier et deuxième évidements E1, E2.

Cela peut être le cas lorsque les normes des dérivées imposées sont trop importantes ou les angles définis de manière inadaptés.

Les barrières de flux magnétique BFM permettent ainsi de canaliser le flux magnétique dans l'entrefer e tout en réduisant la quantité d'aimant permanent M et ainsi utiliser au mieux la matière.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

C'est ainsi que pour simplifier l'industrialisation du rotor, il est possible de définir la zone courbe ZC du profil de la surface d'entrefer SE par une approximation utilisant un système d'équations paramétriques exploitant des splines cubiques présentant des conditions initiales prédéterminées au premier point A' et au deuxième point B' de manière à maximiser le flux magnétique dans l'entrefer (e) du moteur, ou toutes autres équations.

**Revendications**

1. Rotor (1) pour moteur synchrone sans balais à aimants permanents (M) insérés agencé pour être alimenté selon une stratégie de commande prédéterminée, ledit rotor (1) présentant une forme sensiblement cylindrique définissant une surface d'entrefer (SE) du rotor (1) et comprenant :

   - un nombre p de paires d'aimants permanents (M) définissant des pôles magnétiques du rotor (1), et

   - un nombre 2p de logements (L) agencés périodiquement selon un angle polaire de pas ( $\frac{\pi}{p}$ ) prédéterminé, et agencés pour recevoir la pluralité d'aimants permanents (M), les logements (L) étant ménagés dans un empilement de tôles (T) et disposés de façon à orienter radialement le flux magnétique des aimants permanents (M) dans l'entrefer (e) du moteur,
   les aimants permanents (M) étant disposés dans les logements (L) et répartis le long de la circonférence du rotor (1) à proximité de la surface d'entrefer (SE) du rotor (1) selon un angle polaire de pas ( $\frac{\pi}{p}$ ) prédéterminé en lien avec le nombre p de paires d'aimants permanents (M) du rotor (1), chaque aimant permanent (M) présentant un sens de flux magnétique opposé au sens de flux magnétique des deux aimants permanents (M) adjacents afin de produire une induction magnétique selon un angle polaire de pas ( $\frac{2\pi}{p}$ ) dans l'entrefer (e),
   les logements (L) présentant chacun une portion (PA) agencée pour recevoir un aimant permanent (M), un premier évidement (E1) et un deuxième évidement (E2) contigus à ladite portion (PA) et contigus aux surfaces terminales (SA1, SA2) de l'aimant permanent (M) inséré dans ladite portion (PA) du logement (L), lesdites surfaces terminales (SA1, SA2) étant parallèles à la direction d'aimantation de l'aimant permanent (M),
   la surface d'entrefer (SE) du rotor (1) comprenant des zones plates (ZP) de profil disposés sensiblement entre un premier évidement (E1) d'un logement (L) d'un aimant permanent (M) et le deuxième évidement (E2) d'un autre logement (L) d'un aimant permanent (M) contigu, et des zones courbes (ZC) dont la forme de profil est donnée par une équation polaire comprenant des coefficients choisis en fonction de la stratégie de commande déterminée pour définir des harmoniques entre la forme du signal de la force électromotrice et la forme du signal du courant injecté dans le moteur, lesdites zones courbes (ZC) s'étendant sensiblement dans un intervalle angulaire défini depuis un rayon situé entre un premier évidement (E1) et un deuxième évidement (E2) consécutifs de deux aimants permanents (M) adjacents jusqu'à un rayon situé entre un premier évidement (E1) et un deuxième évidement (E2) consécutifs d'un des aimants permanents (M) adjacents correspondant au demi-angle polaire de pas ( $\frac{\pi}{2p}$ ) dans l'entrefer (e),
   lesdits premier et deuxième évidements (E1, E2) définissant des barrières de flux magnétique (BFM) formant des isthmes magnétiques (IM) magnétiquement saturables entre lesdits premier et deuxième évidements (E1, E2) et la surface d'entrefer (SE) du rotor (1),
   lesdits premier et deuxième évidements (E1, E2) présentant une surface supérieure (SUP) convexe en direction de la surface d'entrefer (SE) du rotor (1) et s'étendant dans un plan de coupe transversal à l'axe du rotor (1) depuis un premier point (A) proximal de la surface d'entrefer (SE) du rotor (1) et disposé à l'extrémité de la portion (PA) du logement (L) agencé pour recevoir un aimant permanent (M) jusqu'à un deuxième point (B) proximal de la surface d'entrefer (SE) du rotor (1) telle que la distance de ce deuxième point (B) à la surface d'entrefer (SE) du rotor (1) est supérieure ou égale à une valeur minimale prédéterminée (VMP),
   les points du profil dans le plan de coupe transversal à l'axe du rotor (1) de la surface supérieure (SUP) des premier et deuxième évidements (E1, E2) entre le premier point (A) et le deuxième point (B) étant définis par un système d'équations paramétriques exploitant des splines cubiques présentant des conditions initiales prédéterminées au premier point (A) et au deuxième point (B) de manière à maximiser le flux magnétique dans l'entrefer (e) du moteur.

2. Rotor (1) selon la revendication 1, dans lequel les conditions initiales prédéterminées au premier point (A) et au deuxième point (B) du système d'équations paramétriques exploitant les splines cubiques imposent les directions des dérivés de la surface supérieure (SUP) au premier point (A) et au deuxième point (B).

3. Rotor (1) selon la revendication 2, dans lequel la direction de la dérivé de la surface supérieure (SUP) au premier point (A) est imposée de manière à être sensiblement colinéaire à la direction tangente des surfaces terminales (SA1, SA2) de l'aimant permanent (M) dans le plan de coupe transversal à l'axe du rotor (1), et dans lequel la direction du vecteur de la dérivé de la surface supérieure (SUP) au deuxième point (B) est imposée de manière à être sensiblement colinéaire à la direction de la tangente en un point (B') de la surface d'entrefer (SE) du rotor (1), ce point (B') étant un point de ladite surface d'entrefer (SE) le plus proche du deuxième point (B).

4. Rotor (1) selon la revendication 3, dans lequel les amplitudes et les angles polaires des vecteurs des dérivés au premier point (A) et au deuxième point (B) sont déterminées de façon à maximiser le flux magnétique dans l'entrefer (e), et les coordonnées des vecteurs des dérivés au premier point (A) et au deuxième point (B) sont déterminées de manière à ce que :

> - la distance entre la surface supérieure (SUP) et la surface d'entrefer (SE) reste supérieure ou égale à la valeur minimale prédéterminée (VMP), et
> - le système d'équations paramétriques reste bijectif.

5. Rotor (1) selon l'une des revendications 1 à 4, dans lequel les isthmes magnétiques (IM) présentent une valeur minimale prédéterminée (VMP) supérieure ou égale à l'épaisseur de l'une des tôles de l'empilement de tôles (T).

6. Rotor (1) selon l'une des revendications 1 à 5, dans lequel l'équation polaire donnant le profil de la surface d'entrefer (SE) du rotor (1) est de la forme :

$$R_{rotor}(\theta) = R_0 - \frac{e_0}{\sum_n \alpha_n . \cos(n * p * \theta)}$$

où $R_{rotor}$ est le rayon externe du rotor (1), $R_0$ est une constante prédéterminée, $e_0$ est une valeur prédéfinie d'entrefer (e) minimale du moteur, p est le nombre de paires de pôles du rotor (1), n est l'indice de l'harmonique, les $\alpha_n$ étant des paramètres dont les valeurs pour n=1 à i sont obtenues par la décomposition en série de Fourier de l'induction magnétique de l'entrefer (e) de façon à obtenir une force électromotrice similaire au courant injectée, pour obtenir un couple utile du moteur le plus élevé possible et minimiser les ondulations de couple parasites du moteur provoquées par la stratégie de commande, et dans lequel l'équation polaire du profil de la surface d'entrefer (SE) du rotor (1) est définie dans un intervalle angulaire $\theta$ prédéterminé égal à [0;π/2p], correspondant au demi-angle polaire de pas $\frac{\pi}{2p}$ dans l'entrefer (e).

7. Moteur comprenant un rotor (1) selon l'une des revendications 1 à 6, dans lequel le moteur est commandé par une stratégie de commande générant une onde périodique de courant en créneaux dans les phases du moteur, et dans laquelle la décomposition harmonique en série de Fourier de l'induction magnétique de l'entrefer (e) est déterminée de façon à obtenir une force électromotrice similaire au courant injectée pour avoir un couple moyen du moteur maximum, une ondulation de couple minimale et un couple de détente minimal.

**Patentansprüche**

1. Rotor (1) für einen bürstenlosen Synchronmotor mit eingefügten Permanentmagneten (M), der so angeordnet ist, dass er gemäß einer vorbestimmten Steuerstrategie mit Strom versorgt wird, wobei der Rotor (1) eine im Wesentlichen zylindrische Form aufweist, die eine Luftspaltoberfläche (SE) des Rotors definiert (1), und der Folgendes umfass:

> - eine Anzahl p von Paaren von Permanentmagneten (M), die die Magnetpole des Rotors (1) definieren, und
>
> - eine Anzahl 2p von Gehäusen (L), die periodisch in einem vorbestimmten Polarwinkel der Steigung ($\frac{\pi}{\rho}$) angeordnet sind sowie so angeordnet sind, dass sie die Vielzahl von Permanentmagneten (M) aufnehmen, wobei die Gehäuse (L) aus einem Stapel von Blechen (T) gebildet und so positioniert sind, dass sie den magnetischen Fluss der Permanentmagnete (M) im Luftspalt (e) des Motors radial ausrichten, wobei die Permanentmagnete (M) in den Gehäusen (L) positioniert und entlang des Umfangs des Rotors (1) in der Nähe der Luftspaltoberfläche (SE) des Rotors (1) in einem vorbestimmten Polarwinkel der Steigung ($\frac{\pi}{\rho}$) in Verbindung mit der Anzahl p von Paaren von Permanentmagneten (M) des Rotors (1) verteilt sind, wobei jeder Permanentmagnet (M) eine magnetische Flussrichtung aufweist, die der magnetischen Flussrichtung der beiden benachbarten Permanentmagnete (M) entgegengesetzt ist, um im Luftspalt (e) eine magnetische Induktion in einem Polarwinkel der Steigung ( $\frac{2\pi}{\rho}$ ) zu erzeugen,

wobei die Gehäuse (L) jeweils einen Abschnitt (PA), der so angeordnet ist, dass er einen Permanentmagneten (M) aufnimmt, eine erste Aussparung (E1) und eine zweite Aussparung (E2) aufweisen, die an den Abschnitt (PA) angrenzen und an die Endflächen (SA1, SA2) des in den Abschnitt (PA) des Gehäuses (L) eingefügten Permanentmagneten (M) angrenzen, wobei die Endflächen (SA1, SA2) parallel zur Magnetisierungsrichtung des Permanentmagneten (M) liegen,

wobei die Luftspaltoberfläche (SE) des Rotors (1) flache Profilbereiche (ZP), die im Wesentlichen zwischen einer ersten Aussparung (E1) eines Gehäuses (L) eines Permanentmagneten (M) und der zweiten Aussparung (E2) eines anderen Gehäuses (L) des angrenzenden Permanentmagneten (M) positioniert sind, und gekrümmte Bereiche (ZC) umfasst, dessen Profilform durch eine Polargleichung gegeben ist, die Koeffizienten umfasst, die als Funktion der bestimmten Steuerstrategie ausgewählt werden, um die Harmonischen zwischen der Form des Signals der elektromotorischen Kraft und der Form des Signals des in den Motor eingespeisten Stroms zu definieren, wobei sich die gekrümmten Bereich (ZC) im Wesentlichen in einem Winkelabstand erstreckt, der von einem Radius, der sich zwischen einer ersten Aussparung (E1) und einer zweiten Aussparung (E2), die aufeinanderfolgend sind, zweier benachbarter Permanentmagnete (M) befindet, bis zu einem Radius definiert wird, der sich zwischen einer ersten Aussparung (E1) und einer zweiten Aussparung (E2), die aufeinanderfolgend sind, eines der benachbarten Permanentmagnete (M) befindet und dem halben Polarwinkel der Steigung ( $\frac{\pi}{2\rho}$ ) in dem Luftspalt (e) entspricht,

wobei die erste und die zweite Aussparung (E1, E2) Magnetflussbarrieren (BFM) definieren, die einen magnetisch sättigbaren magnetischen Isthmus (IM) zwischen der ersten und der zweiten Aussparung (E1, E2) und der Luftspaltoberfläche (SE) des Rotors (1) bilden,

wobei die erste und die zweite Aussparung (E1, E2) eine obere Oberfläche (SUP) aufweisen, die in Richtung der Luftspaltoberfläche (SE) des Rotors (1) konvex ist und sich in einer Schnittebene quer zur Achse des Rotors (1) von einem ersten Punkt (A) proximal zur Luftspaltoberfläche (SE) des Rotors (1) erstreckt und am Ende des Abschnitts (PA) des Gehäuses (L) positioniert ist, der so angeordnet ist, dass er einen Permanentmagneten (M) aufnimmt, bis zu einem zweiten Punkt (B) proximal zur Luftspaltoberfläche (SE) des Rotors (1), so dass der Abstand vom zweiten Punkt (B) zur Luftspaltoberfläche (SE) des Rotors (1) gleich oder größer als ein vorbestimmter Mindestwert (VMP) ist,

wobei die Punkte des Profils in der Schnittebene quer zur Achse des Rotors (1) der oberen Oberfläche (SUP) der ersten und der zweiten Aussparung (E1, E2) zwischen dem ersten Punkt (A) und dem zweiten Punkt (B) durch ein System parametrischer Gleichungen unter Verwendung von kubischen Splines, die Anfangsbedingungen aufweisen, die am ersten Punkt (A) und am zweiten Punkt (B) so vorbestimmt sind, dass der magnetische Fluss im Luftspalt (e) des Motors maximiert wird, definiert werden.

2.  Rotor (1) nach Anspruch 1, wobei die vorbestimmten Anfangsbedingungen am ersten Punkt (A) und am zweiten Punkt (B) des Systems parametrischer Gleichungen unter Verwendung der kubischen Splines die Richtungen der Ableitungen von der oberen Oberfläche (SUP) am ersten Punkt (A) und am zweiten Punkt (B) festlegt.

3.  Rotor (1) nach Anspruch 2, wobei die Richtung der Ableitung der oberen Oberfläche (SUP) am ersten Punkt (A) so festgelegt ist, dass sie im Wesentlichen kollinear mit der Tangentenrichtung der Endflächen (SA1, SA2) des Permanentmagneten (M) in der Schnittebene quer zur Achse des Rotors (1) ist, und wobei die Richtung des Vektors der Ableitung der oberen Oberfläche (SUP) am zweiten Punkt (B) so festgelegt ist, dass sie im Wesentlichen kollinear mit der Richtung der Tangente an einem Punkt (B') der Luftspaltoberfläche (SE) des Rotors (1) ist, wobei der Punkt (B') ein Punkt der Luftspaltoberfläche (SE) ist, der am nächsten zum zweiten Punkt (B) liegt.

4.  Rotor (1) nach Anspruch 3, wobei die Amplituden und die Polarwinkel des Vektors der Ableitungen am ersten Punkt (A) und am zweiten Punkt (B) so bestimmt sind, dass der magnetische Fluss im Luftspalt (e) maximiert wird, und die Koordinaten des Vektors der Ableitungen am ersten Punkt (A) und am zweiten Punkt (B) so bestimmt sind, dass:

- der Abstand zwischen der oberen Oberfläche (SUP) und der Luftspaltoberfläche (SE) größer oder gleich dem vorbestimmten Mindestwert (VMP) bleibt, und
- das System parametrischer Gleichungen bijektiv bleibt.

5. Rotor (1) nach einem der Ansprüche 1 bis 4, wobei die magnetischen Isthmen (IM) einen vorbestimmten Mindestwert (VMP) aufweisen, der größer oder gleich der Dicke eines der Bleche des Stapels aus Blechen (T) ist.

6. Rotor (1) nach einem der Ansprüche 1 bis 5, wobei die Polargleichung, die das Profil der Luftspaltoberfläche (SE) des Rotors (1) angibt, die folgende Form hat:

$$R_{rotor}(\theta) = R_0 - \frac{e_0}{\sum_n \alpha_n . \cos(n * p * \theta)}$$

wobei $R_{rotor}$ der Außenradius des Rotors (1) ist, $R_0$ eine vorbestimmte Konstante ist, $e_0$ ein vorbestimmter Minimalwert des Luftspalts (e) des Motors ist, p die Anzahl der Polpaare des Rotors (1) ist und n der Index der Harmonischen ist, wobei $\alpha_n$ die Parameter sind, deren Werte für n=1 bis i durch die Zerlegung in Fourier-Reihen der magnetischen Induktion des Luftspalts (e) erhalten werden, um eine elektromotorische Kraft ähnlich dem eingespeisten Strom zu erhalten, um ein möglichst hohes Nutzdrehmoment des Motors zu erhalten und die durch die Steuerstrategie verursachten parasitären Drehmomentwelligkeiten des Motors zu minimieren, und wobei die Polargleichung des Profils der Luftspaltoberfläche (SE) des Rotors (1) in einem vorbestimmten Winkelintervall θ gleich [0;π/2p] definiert wird, das dem halben Polarwinkel der Steigung $\frac{\pi}{2p}$ im Luftspalt (e) entspricht.

7. Motor, der einen Rotor (1) nach einem der Ansprüche 1 bis 6 umfasst, wobei der Motor durch eine Steuerstrategie gesteuert wird, die eine periodische Welle von Stromspitzen in den Phasen des Motors generiert, und wobei die harmonische Zerlegung in Fourier-Reihen der magnetischen Induktion im Luftspalt (e) so bestimmt wird, dass eine elektromotorische Kraft ähnlich dem eingespeisten Strom erhalten wird, um ein maximales durchschnittliches Drehmoment, eine minimale Drehmomentwelligkeit und ein minimales Rastmoment des Motors zu erreichen.

## Claims

1. A rotor (1) for a brushless synchronous motor with inserted permanent magnets (M) arranged to be powered according to a predetermined control strategy, said rotor (1) having a substantially cylindrical shape defining an air gap surface (SE) of the rotor (1) and comprising:

   - a number p of pairs of permanent magnets (M) defining magnetic poles of the rotor (1), and

   - a number 2p of housings (L) arranged periodically according to a predetermined pitch polar angle ($\frac{\pi}{p}$), and arranged to receive the plurality of permanent magnets (M), the housings (L) being formed in a stack of sheets (T) and disposed so as to radially orient the magnetic flux of the permanent magnets (M) in the air gap (e) of the motor, the permanent magnets (M) being disposed in the housings (L) and distributed along the circumference of the rotor (1) close to the air gap surface (SE) of the rotor (1) according to a predetermined pitch polar angle ($\frac{\pi}{p}$) related to the number p of pairs of permanent magnets (M) of the rotor (1), each permanent magnet (M) having a direction of magnetic flux opposite to the direction of magnetic flux of the two adjacent permanent magnets (M) in order to produce a magnetic induction according to a pitch polar angle ($\frac{2\pi}{p}$) in the air gap (e),
   the housings (L) each having a portion (PA) arranged to receive a permanent magnet (M), a first recess (E 1) and a second recess (E2) contiguous to said portion (PA) and contiguous to the end surfaces (SA1, SA2) of the permanent magnet (M) inserted in the said portion (PA) of the housing (L), said end surfaces (SA1, SA2) being parallel to the direction of magnetization of the permanent magnet (M),
   the air gap surface (SE) of the rotor (1) comprising flat profile areas (ZP) disposed substantially between a first recess (E1) of a housing (L) of a permanent magnet (M) and the second recess (E2) of another housing (L) of an adjoining permanent magnet (M), and curved areas (ZC) whose profile shape is given by a polar equation comprising coefficients chosen as a function of the control strategy determined to define harmonics between the shape of the signal of the electromotive force and the shape of the signal of the current injected into the motor, said curved areas (ZC) extending substantially in an angular interval defined from a radius located between consecutive first recess (E1) and second recess (E2) of two adjacent permanent magnets (M) up to a radius located between consecutive first recess (E1) and second recess (E2) of one of the adjacent permanent magnets (M) corresponding to the pitch polar half-angle ( $\frac{\pi}{2p}$ ) in the air gap (e),

said first and second recesses (E1, E2) defining magnetic flux barriers (BFM) forming magnetically saturable magnetic isthmuses (IM) between said first and second recesses (E1, E2) and the air gap surface (SE) of the rotor (1),

said first and second recesses (E1, E2) having a convex upper surface (SUP) in the direction of the air gap surface (SE) of the rotor (1) and extending in a cutting plane transverse to the axis of the rotor (1) from a first point (A) proximal to the air gap surface (SE) of the rotor (1) and disposed at the end of the portion (PA) of the housing (L) arranged to receive a permanent magnet (M) up to a second point (B) proximal to the air gap surface (SE) of the rotor (1) such that the distance from this second point (B) to the air gap surface (SE) of the rotor (1) is greater than or equal to a predetermined minimum value (VMP),

the points of the profile in the cutting plane transverse to the axis of the rotor (1) of the upper surface (SUP) of the first and second recesses (E1, E2) between the first point (A) and the second point (B) being defined by a system of parametric equations exploiting cubic splines having predetermined initial conditions at the first point (A) and at the second point (B) so as to maximize the magnetic flux in the air gap (e) of the motor.

2. The rotor (1) according to claim 1, wherein the predetermined initial conditions at the first point (A) and at the second point (B) of the system of parametric equations exploiting the cubic splines impose the directions of the derivatives of the upper surface (SUP) at the first point (A) and at the second point (B).

3. The rotor (1) according to claim 2, wherein the direction of the derivative of the upper surface (SUP) at the first point (A) is imposed so as to be substantially collinear with the tangent direction of the end surfaces (SA1, SA2) of the permanent magnet (M) in the cutting plane transverse to the axis of the rotor (1), and wherein the direction of the vector of the derivative of the upper surface (SUP) at the second point (B) is imposed so as to be substantially collinear with the direction of the tangent at a point (B') of the air gap surface (SE) of the rotor (1), this point (B') being a point of said air gap surface (SE) closest to the second point (B).

4. The rotor (1) according to claim 3, wherein the amplitudes and the polar angles of the vectors of the derivatives at the first point (A) and at the second point (B) are determined so as to maximize the magnetic flux in the air gap (e), and the coordinates of the vectors of the derivatives at the first point (A) and at the second point (B) are determined so that:

   - the distance between the upper surface (SUP) and the air gap surface (SE) remains greater than or equal to the predetermined minimum value (VMP), and
   - the system of parametric equations remains bijective.

5. The rotor (1) according to any of claims 1 to 4, wherein the magnetic isthmuses (IM) have a predetermined minimum value (VMP) greater than or equal to the thickness of one of the sheets of the stack of sheets (T).

6. The rotor (1) according to any of claims 1 to 5, wherein the polar equation giving the profile of the air gap surface (SE) of the rotor (1) is of the form:

$$R_{rotor}\left(\theta\right) = R_0 - \frac{e_0}{\sum_n \alpha_n \cdot cos(n * p * \theta)}$$

where $R_{rotor}$ is the external radius of the rotor (1), $R_0$ is a predetermined constant, $e_0$ is a minimum predefined value of air gap (e) of the motor, p is the number of pairs of poles of the rotor (1), n is the index of the harmonic, the $\alpha_n$ being parameters whose values for n=1 to i are obtained by the decomposition in Fourier series of the magnetic induction of the air gap (e) so as to obtain an electromotive force similar to the injected current, to obtain an useful torque of the motor as high as possible and minimize the parasitic torque ripples of the motor caused by the control strategy, and wherein the polar equation of the profile of the air gap surface (SE) of the rotor (1) is defined in a predetermined angular interval $\theta$ equal to [0;π/2p], corresponding to the pitch polar half-angle $\frac{\pi}{2p}$ in the air gap (e).

7. A motor comprising a rotor (1) according to any of claims 1 to 6, wherein the motor is controlled by a control strategy generating a current periodic wave in squares in the phases of the motor, and in which the harmonic decomposition in Fourier series of the magnetic induction of the air gap (e) is determined so as to obtain an electromotive force similar to the injected current to have a maximum average torque of the motor, a minimum torque ripple and a minimum cogging torque.

[Fig. 1]

[Fig. 2]

[Fig. 3]

[Fig. 4]

[Fig. 5]

[Fig. 6]

[Fig. 7]

[Fig. 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012014836 A1
- JP 2009118731 B
- US 20120256514 A
- US 20180205274 A
- WO 2020066368 A1